# EUROPEAN PATENT APPLICATION

(11) **EP 1 847 922 A2**
(43) Date of publication of application: **24.10.2007**
(21) Application number: 07251562.0
(22) Date of filing: 11.04.2007
(51) Int. Cl.: G06F 3/06

(54) **A recording and reproducing apparatus and a reproducing apparatus**

(30) Priority: 17.04.2006 JP 2006113540
(71) Applicant: Sony Corporation, Minato-ku Tokyo (JP)
(72) Inventor: Kikuchi, Hiroaki, Minato-ku Tokyo 108-0075 (JP); Kiriyama, Hiroshi, Minato-ku Tokyo 108-0075 (JP); Imaida, Hideyuki, Minato-ku Tokyo 108-0075 (JP)
(74) Representative: Jackson, Jonathan Andrew

(57) **Abstract**

There is provided a recording and reproducing apparatus for recording and reproducing data on and from a recording medium with a sequential access system. The apparatus includes a connection unit configured to connect a network, a processor configured to mount a disk apparatus, to reproduce data from the recording medium, to convert the reproduced data into files, to write the files in the disk apparatus based on receiving first information via a network that instructs the recording and reproducing apparatus to import data recorded on the recording medium into the disk apparatus, to read the files from the disk apparatus, and to record data converted from the read files on the recording medium based on receiving second information via a network that instructs the recording and reproducing apparatus to write the files in the disk apparatus on the recording medium.

## Description

The present invention relates to a recording and reproducing apparatus and a reproducing apparatus.

In a high-end post production, a recording and reproducing apparatus having a sequential-access system such as a VTR (video tape recorder) is generally expected to be used as an input source of raw materials and outputting/storing destination for edited and synthesized results, and a reproducing apparatus having a sequential-access system such as a telecine apparatus (apparatus for converting film screen images into video data) as an input source of raw materials in a non-linear editing system. The recording and reproducing apparatus and reproducing apparatus may be connected to a computer (personal computer or workstation) for editing and synthesizing as one of input and output devices.

The existing technologies used for connecting the sequential-access system recording and reproducing apparatus to the computer will be verified as follows.

### (1) TAPE STREAMER

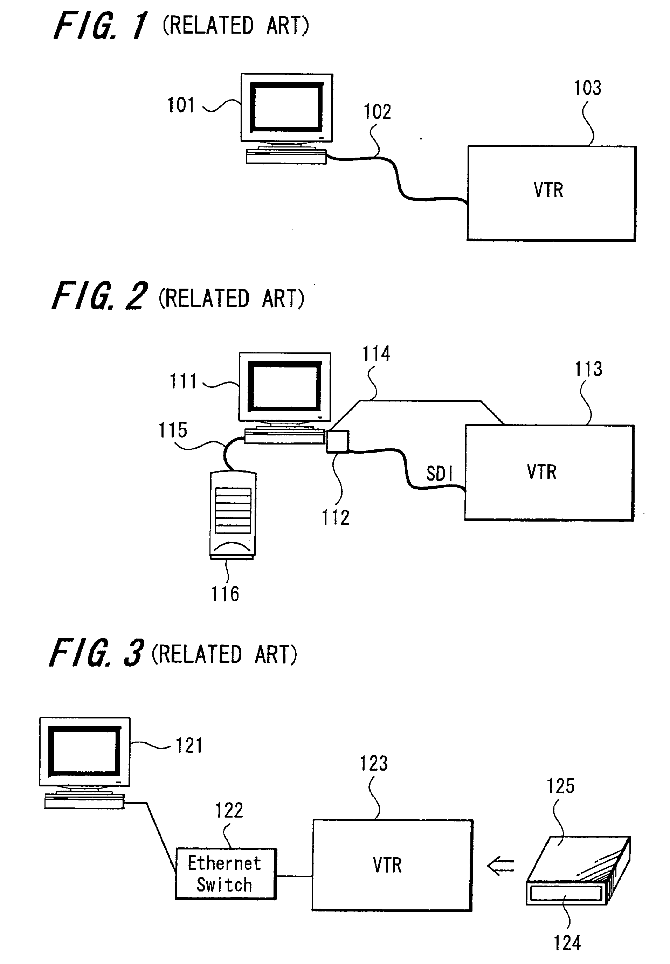

As shown in FIG. 1, a VTR 103 is connected to a workstation 101 through a SCSI (small computer systems interface) cable 102. The workstation 101 supports the SCSI standardized tape command, and transmits and receives data between the workstation 101 and the VTR 103 by implementing standard functions for a UNIX®-based OS (operating system) such as a tar command, a mt command, and the like (commands that control a tape streamer to back up the hard disk).

However, in a non-linear editing system, various computers (e.g., computers using Windows® as an OS and Macintosh® computer) are available for editing and synthesizing data. According to this method, the non-linear editing system that employs a computer operable with OS other than the UNIX-based OS may have to install special application software to support tape streamer control commands. In addition, a tape format used in the VTR may be modified for managing the data with volume unit starting with BOT (begin of tape) for the tape streamer (if not modified, a program operable to function as the tape streamer seen from the outside may be created to make the CPU to execute the program; realization of which is also difficult).

### (2) SDI connection

As shown in FIG. 2, an SDI (Serial Digital Interface) input and output (I/O) board 112 is attached to the workstation 111, and a VTR 113 is connected to the workstation 111 via the SDI. The VTR 113 is controlled through a D-sub9pin cable 114 and the like, and video data are transmitted and received between the workstation 111 and the VTR 113 via the SDI. If video data include high bit rate data (e.g., if video data include non-compressed HDTV (high-definition television) signals) to secure high-rate data reading or writing, a RAID (redundant array of independent disks (disk apparatus with redundancy) 116 is connected to the workstation 111 through a fiber channel 115 and the like to stripe video data to transmit from the VTR 113 and record on the RAID 116.

However, the method may require a workstation to install special application software to control the VTR (or RAID) for receiving and transmitting video data and special hardware such as an SDI input and output board. According to this method, general workstations and personal computers without such special application software and hardware may not receive and transmit video data between the workstations and personal computers and the VTR.

### (3) e-VTR

As shown in FIG. 3, a VTR 123 is connected to a personal computer 121 using an Ethernet® switch 122 as a switching hub via the Ethernet. The VTR 123 employs a video cassette 125 to which a memory tag (memory label) 124 is attached. File information that manages video data recorded on the video tape in the video cassette 125 as a file is stored in the memory tag 124 (disclosed in International Published No. WO-A-2002/086895 and Japanese Unexamined Patent Publication No. JP-A-2004-64365). The personal computer 121 uses an extended FTP (file transfer protocol) command to read file information from the memory tag 124 and control the VTR 123. This extended FTP command used for controlling the VTR 123 to transmit and receive video data as files between the personal computer 121 and the VTR 123.

However, according to the aforementioned method, the personal computer may need special application software to use the extended FTP command. Thus, ordinary personal computers without special application software cannot receive and transmit video data and the like between the personal computer and the VTR. Moreover, the VTR may need the special video cassette to which the memory tag is attached and hence, the VTR may not be able to employ general video cassettes.

When the existing technologies are used for connecting the recording and reproducing apparatus with a sequential-access system to a computer, special application software and hardware may have to be installed to control the recording and reproducing apparatus. In addition, the recording format may have to be changed (change into a tape format for tape streamer, etc.), or may have to use a special recording medium (special video cassette with a memory tag for storing the file information, etc.).

In view of the aforementioned points, an embodiment of the present invention intends to provide a recording and reproducing apparatus or a reproducing apparatus with a sequential-access system that may be connected to a computer as one of input/output devices without installing any special application software and hardware, and a recording format or special recording medium may not be used for the recording and reproducing apparatus.

According to an embodiment of the present invention, there is provided a recording and reproducing apparatus for recording and reproducing data on and from a recording medium with a sequential access system. The recording and reproducing apparatus according to an embodiment of the present invention includes a connection unit configured to connect a network, a processor configured to mount a disk apparatus connected to a server as a client in file-sharing system via the connection unit, to reproduce data from the recording medium, to convert the reproduced data into files, and to write the files in the disk apparatus based on receiving first information via a network that instructs the recording and reproducing apparatus to import data recorded on the recording medium into the disk apparatus. Further, in the recording and reproducing apparatus according to an embodiment of the present invention, the processor configured to read the files from the disk apparatus, and to record data converted from the read files on the recording medium based on receiving second information via a network that instructs the recording and reproducing apparatus to write the files in the disk apparatus on the recording medium.

The recording and reproducing apparatus may operate as a client in a file-sharing system and mount a disk apparatus connected to a server as a local disk. The recording and reproducing apparatus may reproduce data from a recording medium, and convert the reproduced data into files to write in the mounted disk apparatus on receiving first information via a network that instructs the recording and reproducing apparatus to import data on a recording medium in the recording and reproducing apparatus. On the other hand, the recording and reproducing apparatus may read the files from the mounted disk apparatus and convert the files into the data to record on the recording medium on receiving second information via a network that instructs the recording and reproducing apparatus to write the files in the disk apparatus on the recording medium.

Thus, when connecting the recording and reproducing apparatus to a computer, the computer may only specify the recording and reproducing apparatus via network to transmit the first information and the second information, and the recording and reproducing apparatus may automatically import the information to the disk apparatus or export to the recording medium in the background thereafter.

Accordingly, the recording and reproducing apparatus having a sequential-access system may only include general application software for a network communication or a file-sharing without any special application software and hardware in order to connect to a computer as one of the input/output devices regardless of types of computers. In addition, a recording format may not need being changed (change into a tape format for tape streamer, etc.), or may not need a special recording medium (special video cassette with a memory tag for storing the file information, etc.).

Subsequently, according to an embodiment of the present invention, there is provided a reproducing apparatus including a reproducing system for reproducing data from a recording medium having a sequential access system. The a reproducing apparatus includes a connection unit configured to connect a network, a processor configured to mount a disk apparatus connected to a server as a client in file-sharing system via the connection unit, to reproduce data from the recording medium, to convert the reproduced data into files, and to write the files in the disk apparatus based on receiving information via a network that instructs the reproducing apparatus to import data recorded on the recording medium into the disk apparatus.

The reproducing apparatus may operate as a client in a file-sharing system and mount a disk apparatus connected to a server as a local disk. The reproducing apparatus may reproduce data from a recording medium, and convert the reproduced data into files to write in the mounted disk apparatus on receiving information via a network that instructs the reproducing apparatus to import data on a recording medium in the reproducing apparatus.

Thus, when connecting the reproducing apparatus to a computer, the computer may only specify the reproducing apparatus via network to transmit the information, and the reproducing apparatus may automatically import the information to the disk apparatus in the background thereafter.

Accordingly, the reproducing apparatus having a sequential-access system may only include general application software for a network communication or a file-sharing without any special application software and hardware in order to connect to a computer as one of the input/output devices regardless of types of computers.

A recording and reproducing apparatus according to an embodiment of the present invention, regardless of types of computer employed, the recording and reproducing apparatus or a reproducing apparatus having a sequential-access system may be connected to a computer as one of input/output devices without installing any special application software and hardware, and a recording format (change into a tape format for tape streamer, etc.) or special recording medium (special video cassette with a memory tag for storing the file information, etc.) may not be used for the recording and reproducing apparatus.

A reproducing apparatus according to an embodiment of the present invention, regardless of types of computers, the reproducing apparatus having a sequential-access system may not need including any special application software and hardware in order to connect to a computer as one of the input/output devices.

Preferably, the present application relates to a recording and reproducing apparatus having a sequential-access system and a reproducing apparatus having a sequential-access system capable of connecting to a computer as one of input/output devices without installing any special application software and hardware.

Various respective aspects and features of the invention are defined in the appended claims. Features from the dependent claims may be combined with features of the independent claims as appropriate and not merely as explicitly set out in the claims.

The invention will now be described by way of example with reference to the accompanying drawings, throughout which like parts are referred to by like references, and in which:
FIG. 1 is a diagram showing one example employing the existing technology to connect a VTR with a computer according to a related-art;
FIG. 2 is a diagram showing one example employing the existing technology to connect a VTR with a computer according to a related-art;
FIG. 3 is a diagram showing one example employing the existing technology to connect a VTR with a computer according to a related-art;
FIG. 4 is a diagram showing an entire configuration example of a non-linear editing system connected with a VTR and the like to which an embodiment of the present invention is applied;
FIG. 5 is a block diagram showing a hardware configuration of the VTR shown in FIG. 4;
FIG. 6 is a diagram showing a screenshot of a Web page released by the VTR shown in FIG. 4;
FIG. 7 is a diagram showing a screenshot of a Web page released by the VTR shown in FIG. 4;
FIG. 8 is a diagram showing a screenshot of a Web page released by the VTR shown in FIG. 4;
FIG. 9 is a block diagram showing a manner in which the VTR shown in FIG. 4 is operated when data are imported into the hard disk apparatus;
FIG. 10 is a block diagram showing a manner in which the VTR shown in FIG. 4 is operated when data are written on a video tape;
FIG. 11 is a block diagram showing a hardware configuration of the telecine apparatus shown in FIG. 4;
FIG. 12 is a block diagram showing a manner in which the telecine apparatus shown in FIG. 4 is operated when data are imported into the hard disk apparatus; and
FIG. 13 is a block diagram showing an entire configuration of a non-linear editing system to which the VTR according to an embodiment of the present invention is connected.

Embodiments according to the present invention will be described below in detail with reference to the drawings.

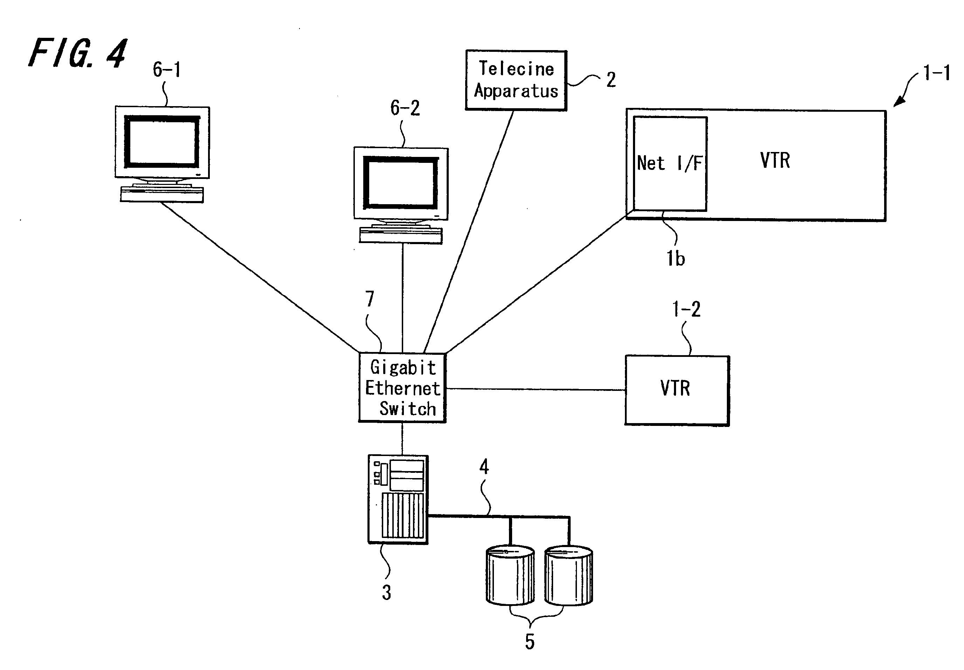

FIG. 4 is a diagram showing an entire configuration example of a non-linear editing system connected with a VTR 1 (two VTRs 1-1 and 1-2 in FIG. 4) and a telecine apparatus 2 to which an embodiment of the present invention is applied. As shown in FIG. 4, in the non-linear editing system, VTRs 1-1 and 1-2, the telecine apparatus 2, a central server 3 and host computers 6-1 and 6-2 are connected the gigabit Ethernet® through a gigabit Ethernet switch 7 that operates as a switching hub.

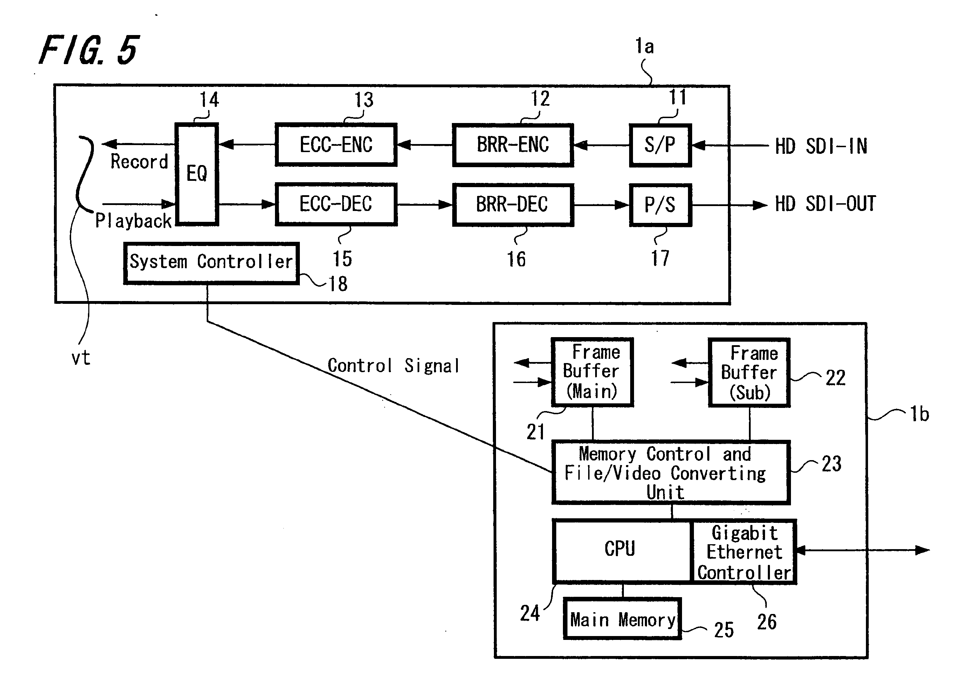

Hard disk apparatus 5 (two hard disk apparatus in FIG. 5) are connected to the central server 3 via a SAN (storage area network) 4 using a fiber channel. The central server 3 operates as an NFS (network file system) server of the file sharing system NFS for the UNIX®-based OS to export the hard disk apparatus 5.

Each host computer 6 is used for editing and synthesizing data (the computer may be a workstation or a personal computer using Windows® as the OS or Macintosh® computer). The host computer 6 includes general application software but does not install special application software and hardware to control the VTR and the telecine apparatus.

Each of the VTR 1 and the telecine apparatus 2 is connected to the gigabit Ethernet via the net interface unit (I/F unit) 1b as representatively shown with the VTR 1-1.

FIG. 5 is a block diagram showing a hardware configuration of the VTR 1. The VTR 1 includes a recording and reproducing unit 1a that fundamentally functions as the VTR, and the net interface unit 1b. The net interface unit 1b is integrated with the recording and reproducing unit 1a and housed in the same case. Notice that the present invention is not limited thereto; and the net interface unit 1b may be attached to the case of the VTR 1 as an external device.

The recording and reproducing unit 1a includes a HD-SDI (Serial Digital Interface) standard input and output port (I/O port). The HD-SDI standard serial digital video data (having the bit rate of 1.485 Gbps) inputted from this port to the recording and reproducing unit 1a are converted in the form of serial to parallel data by the serial-to-parallel (S/P) converting circuit 11, which are then compressed into the data having approximately half of the bit rate (about 800 Mbps) by a BRR (bit rate reduction) encoder 12. The data obtained from the BRR encoder 12 are added with an error-correction code by an ECC (error correction code) encoder 13, frequency characteristics of which are corrected by an equalizer 14, and then recorded using a recording head (not shown) on a video tape vt contained in a video cassette placed on the recording and reproducing unit 1a.

Further, the frequency characteristics of the video data reproduced from a video tape tp using a reproducing head (not shown) are corrected by the equalizer 14, error-corrected by the ECC decoder 15, expanded to the original bit rate (1.485 Gbps obtained before compressed by the BRR encoder 12), converted in the form of parallel to serial data by the parallel-to-serial (P/S) converting circuit 17, and outputted from the aforementioned port. A system controller 18 controls the respective units contained in the recording and reproducing unit 1a.

The net interface (net I/F) unit 1b includes a frame buffer (main) 21, a frame buffer (sub) 22, a memory control and file/video converting unit 23, a CPU (central processing unit) 24, a main memory 25 and a gigabit Ethernet controller 26 for connecting the net interface unit 1b to the gigabit Ethernet.

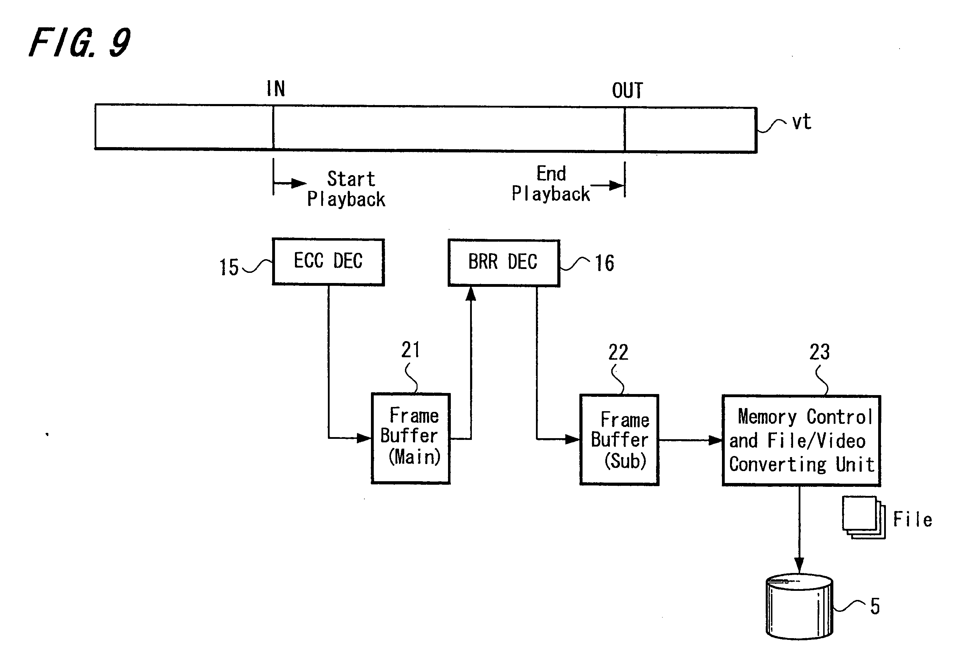

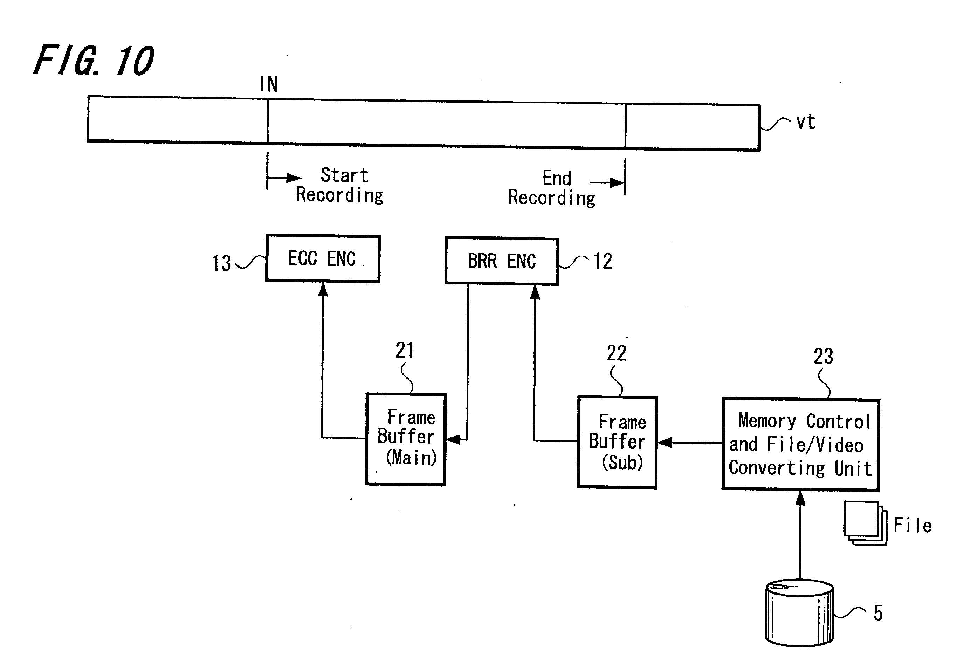

Although the frame buffer (main) 21 and the frame buffer (sub) 22 have capacities corresponding to a plurality of frames, the frame buffer (main) 21 has a capacity larger than that of the frame buffer (sub) 22. The frame buffers 21 and 22 transmit and receive video data between the BRR encoder 12, the ECC encoder 13, the ECC decoder 15 and the BRR decoder 16 contained in the recording and reproducing unit 1a as will be described later with reference to FIGS. 9 and 10; however, connection lines between the unnits are omitted from FIG. 5 (the connection lines are shown at the lower sides of the BRR encoder 12, the ECC encoder 13, the ECC decoder 15 and the BRR decoder 16 or at the lateral sides of the frame buffers 21 and 22 using short arrows).

The memory control and file/video converting unit 23 is formed of a FPGA (field programmable gate array); that is, a programmable LSI (large scale integrated circuit), which includes a function to control the frame buffers 21 and 22 and a function to convert video data supplied from the frame buffer 22 into one image file relative to one frame and to convert an image file supplied through the Ethernet controller 26 into video data relative to one frame for each file.

The main memory 25 includes NFS software, Web server software and programs to control respective units contained in the net interface unit 1b as programs executed by the CPU 24. The CPU 24 starts up the Web server using the Web server software when activating the net interface unit 1b.

Web pages released by the Web server are as follows:
- "DISK SETUP" page for mounting the hard disk apparatus on the VTR 1 as a local disk;
- "IMPORT" page for importing video data into the mounted hard disk apparatus; and
- "EXPORT" page for exporting video data from the hard disk apparatus to the video tape.

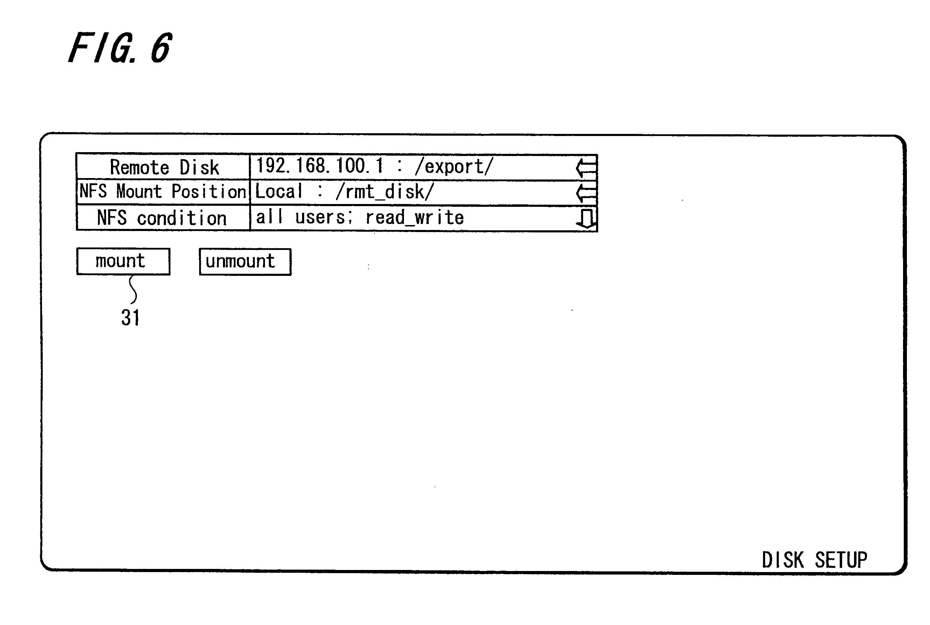

FIG. 6 shows the "DISK SETUP" page. When a user selects an exported remote disk, a mount position and the like, and clicks a "mount" button 31, the NFS software on the main memory 25 activates the CPU 21 (FIG. 5) to operate as the NFS client and mount the exported hard disk apparatus (hard disk apparatus 5 in FIG. 4) as a local disk.

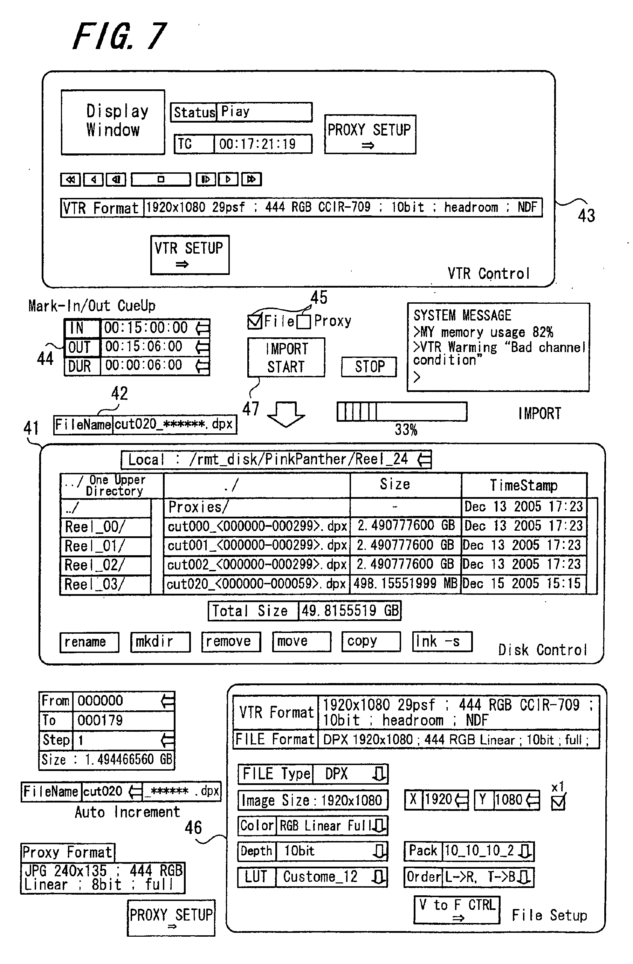

FIG. 7 shows "IMPORT" page. The following ones are contained in the displayed contents of this page:
- "Disk Control" panel 41 for displaying and controlling a list of image files in the mounted hard disk apparatus;
- Input field 42 for entering names of image files imported into the hard disk apparatus and serial numbers of the initial numerals (sequential serial number of the files relative to respective frames on one-frame per one-file basis due to the conversion processing done by the aforementioned memory control and file/video converting unit 23 (FIG. 5));
- "VTR Control" panel 43 including "VTR SETUP" button for opening a page to set up (setting image size, frame rate, time code, etc.) of the VTR 1, a button for operating the VTR 1, a display window for displaying a proxy image of video data currently reproduced by the VTR 1, and "PROXY SETUP" button for opening a page to set up the size of proxy image and the like;
- Range specification field 44 for specifying IN-point and OUT-point that indicate a range for importing video data into the hard disk apparatus by entering time code values or by clicking to mark-in "IN" box and "OUT" box;
- Check box 45 for selecting both or one of an image file and a proxy image file to import into the hard disk apparatus;
- "FILE Setup" panel 46 for setting up the file system and the size of image file imported into the hard disk apparatus; and
- "IMPORT START" button for starting to import video data into the hard disk apparatus.

The check box 45 is prepared for the following use. Since the main image file is large in size, the "Proxy" in the check box 45 is checked to import the proxy images only relative to the whole length of the video tape into the hard disk apparatus. Subsequently, the IN-point and the OUT-point are specified while reproducing the proxy images imported into the hard disk apparatus to automatically import the main image file based on the IN-point and the OUT-point. Thus, the check box 45 is employed with off-line application. Conversely, the proxy image is imported off-lined to maximize a rate at which the main image file is imported.

The followings are the procedure for operating the "IMPORT" page. First, a user specifies a directory on the "Disk Control" panel 41 to locate the image file (clip) imported into the hard disk apparatus. Next, the user enters names and numerals of serial number of the imported image files (clips) in the input field 42. Subsequently, while watching the proxy image, the user determines an image to be imported into the hard disk apparatus by operating the VTR 1 on the "VTR Control" panel 43. Subsequently, the user specifies the IN-point and the OUT-point of the video data imported into the hard disk apparatus on the range specification field 44. The user checks the check box 45. After the user has optionally set up "FILE Setup" panel 46, the user clicks the "IMPORT START button" 47. When the user clicks the "IMPORT START button" 47, information indicating the operated contents on the "IMPORT" page is transmitted from the Web browser to the Web server.

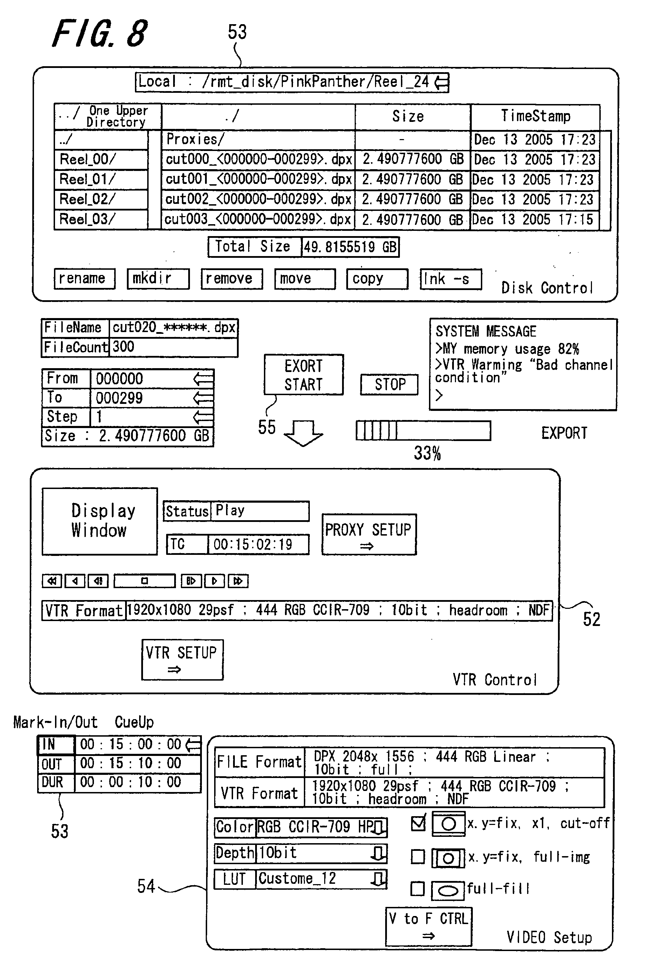

FIG. 8 shows an "EXPORT" page. Displayed contents of the "EXPORT" page are as follows:
- "Disk Control" panel 51 containing the same displayed contents as those of the "Disc Control" panel 41 for the "IMPORT";
- "VTR Control" panel 52 of the same displayed contents as those of the "VTR Control" panel 43 for the "IMPORT";
- A starting position specification field 53 for specifying the IN-point used as a video tape write start position by entering a time code value or by clicking to mark-in the "IN" box;
- "VIDEO Setup" panel 54 for setting the size of video data to be exported to the video tape and the like; and

"EXPORT START button" 55 for starting to export data from the hard disk apparatus to the video tape.

The procedure for operating the "EXPORT" page is as follows. First, a range of the files to be exported to the video tape is determined by the "Disk Control" panel 51 (since one file corresponds to one frame (1 file = 1 frame) by conducting conversion processing via the aforementioned memory control and file/video converting unit 23 (FIG 5). If N files with a serial numbers, each having the same file name, are specified for exporting, consecutive N frames are determined to be exported). Next, the export starting position is determined by operating the VTR 1 on the "VTR Control" panel while observing a proxy image. The IN-point is specified on the starting position specification field 53 (since the number of frames is determined by specifying the range of the files on the "Disk Control" panel 51, the OUT-point is automatically determined). After optionally setting "VIDEO Setup" panel 54, the user clicks the "EXPORT START button" 55. When clicking the "EXPORT START button" 55, information indicating the operated contents on the "EXPORT" page is transmitted from the Web browser to the Web server.

Subsequently, an operation of the VTR 1 when the "IMPORT START button" 47 is clicked on the "IMPORT" page shown in FIG. 7 and a manner in which an operation of the VTR 1 when the "EXPORT START button" 55 is clicked on the "EXPORT" page shown in FIG. 8 will be described with reference to FIG. 5.

When clicking the "IMPORT START button" 47 on the "IMPORT" page, the CPU 24 contained in the net interface unit 1b transmits control signals corresponding to reproducing video data ranged from the IN-point to the OUT-point specified by the range specification field 44 (FIG. 7) from the video tape vt to the system controller 18.

The recording and reproducing unit 1a reproduces video data ranged from the specified IN-point to the OUT-point on the video tape vt based on this control signal as shown in FIG. 9. Then, video data (compressed video data obtained before expanded by the BRR decoder 16) error-corrected by the ECC decoder 15 are buffered by the frame buffer (main) 21 and supplied to the BRR decoder 16. Non-compressed video data expanded to the original bit rate by the BRR decoder 16 are buffered by the frame buffer (sub) 22 and supplied to the memory control and file/video converting unit 23.

The file/video converting unit 23 converts supplied video data into one image file per frame. The CPU 24 writes the image files in a directory specified by the "Disk Control" panel 41 (FIG. 7) of directories of the hard disk apparatus (hard disk apparatus 5 shown in FIG. 4) mounted on the VTR 1 as the files having names and serial numbers entered by the input field 42 (FIG. 7).

It should be noted that when the band of the network is narrower than that of the VTR 1, the free space of the frame buffer (main) 21 and the frame buffer (sub) 22 (i.e., the predetermined threshold value or less) may decrease, and hence the CPU 24 interrupts reproducing the video tape vt. After exporting the video data to the hard disk apparatus, sufficient free space may be obtained, and thus the CPU 24 restarts to reproduce the video tape vt.

On the other hand, when the user clicks the "EXPORT START button" 55 on the "EXPORT" page, the CPU 24 transmits a control signal to start the recording of video data on the video tape vt from the IN-point specified by the starting position specification field 53 (FIG. 8) to the system controller 11. As shown in FIG. 10, the CPU 24 reads the files in the range specified by the "Disk Control" panel 51 (FIG. 8) determined by the hard disk apparatus (the hard disk apparatus 5 shown in FIG. 4) mounted on the VTR 1 and supplies the files to the memory control and file/video converting circuit 23.

The file/video converting unit 23 converts the supplied files into video data relative to one frame per file. As shown in FIG. 10, the video data are buffered by the frame buffer (sub) 22 and supplied to the BRR encoder 12. The video data compressed by the BRR encoder 12 are buffered by the frame buffer (main) 21 and supplied to the ECC encoder 13. The video data to which the error-correction code is added by the ECC encoder 13 is recorded from the specified IN-point on the video tape vt.

It should be noted that when the band of the network is narrower than that of the VTR 1, the residual video data in the frame buffer (main) 21 and the frame buffer (sub) 22 are decreased (the predetermined threshold value or less), and hence, the CPU 24 interrupts recording the data on the video tape vt. If sufficient amount of the video data are imported from the hard disk apparatus and stored in the frame buffer (main) 21 and the frame buffer (sub) 22 later, the CPU 24 restarts to record on the video tape vt.

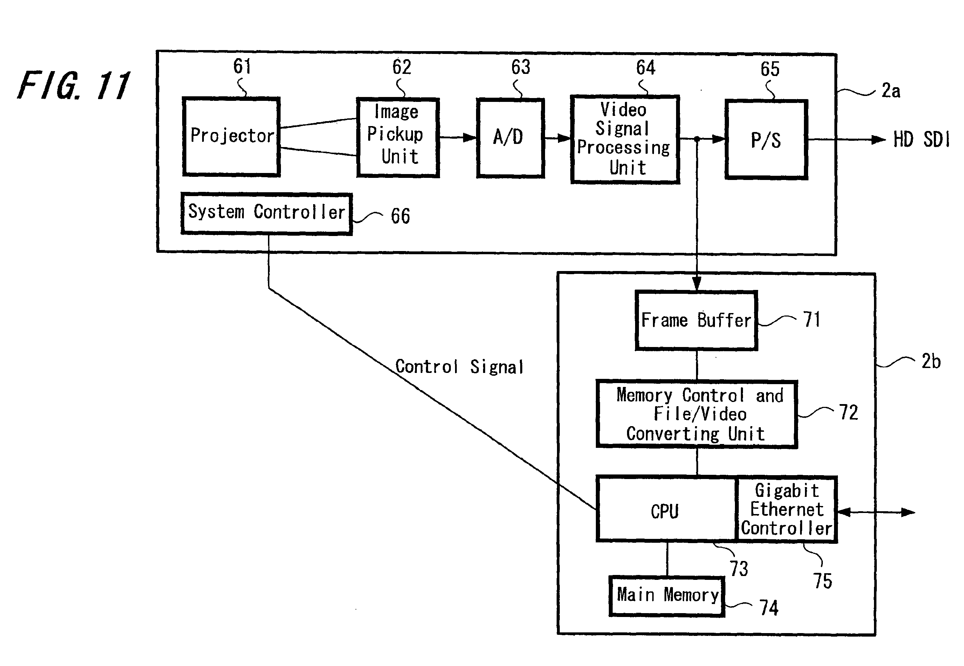

Subsequently, an configuration of the telecine apparatus 2 shown in FIG. 4 will be described. FIG. 11 is a diagram showing a hardware configuration of the telecine apparatus 2. As shown in FIG. 11, the telecine apparatus 2 includes a film/video converting unit 2a, that is, a fundamental function of the telecine apparatus, and a net interface unit 2b. The net interface unit 2b may be integrated with the film/video converting unit 2a and contained in the same case. Notice that the net interface unit 2b may be externally attached to the case of the telecine apparatus 2 as another example.

In the film/video converting unit 2a, image light from a cinema film reproduced by a projector 61 is photo-electrically converted by an image pickup unit 62 such as a CCD, converted in the form of analog to digital data by an A/D (analog-to-digital) converter 63 and supplied to a video signal processing unit 64. In the video signal processing unit 64, the supplied digital image data are processed by suitable data processing such as blanking mixture, black level clipping, gain control pedestal adjustment, shading correction and gamma correction, and converted into SMPTE standard digital video data with high-definition resolution. The digital video data are converted in the form of parallel to serial data by a parallel-to-serial (P/S) converting circuit 65 and outputted from a HD-SDI standard output port. The system controller 66 controls respective units in this film/video converting unit 2a.

The net interface unit 2b includes a frame buffer 71, a memory control and file/video converting unit 72, a CPU 73, a main memory 74, a gigabit Ethernet controller 75 for connection to the gigabit Ethernet.

The memory control and file/video converting unit 72 is formed of an FPGA (field programmable gate array), that is, a programmable LSI (large scale integrated circuit), which includes a function to control the frame buffer 71 and a function to convert the video data supplied from the frame buffer 71 into one image file per file.

The main memory 74 includes NFS software, Web server software and programs to control the respective units in the net interface unit 2b as the programs executed by the CPU 73. The CPU 73 starts up the Web server based on the Web server software when the net interface unit 2b is activated.

This Web server releases the Web pages corresponding to the "DISK SETUP" page (FIG. 6) and "IMPORT" page (FIG. 7) that have been described with reference to the VTR 1, although not shown in the figure.

When the mount operation (corresponding to the operation of the VTR 1 on the "DISK SETUP" page) of the hard disk apparatus and the import operation (corresponding to the operation of the VTR 1 on the "IMPORT" page) of the video data to the mounted hard disk apparatus are carried out, the CPU 73 in the net interface unit 2b transmits a control signal to reproduce the screen images in a range from the specified IN-point to OUT-point (e.g., IN-point and OUT-point are specified at the frame unit of the cinema film) from the cinema film to the system controller 66 in the film/video converting unit 2a.

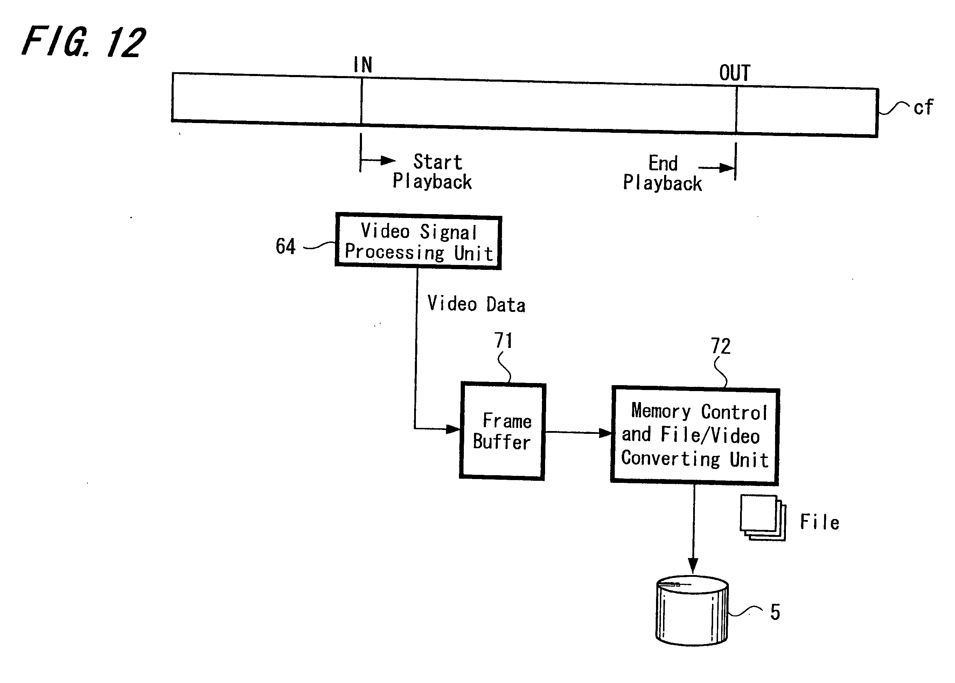

The film/video converting unit 2a reproduces screen images of the cinema film cf ranged from the specified IN-point to OUT-point based on the control signal as shown in FIG. 12. The SMPTE standard digital video data outputted from the video signal processing unit 64 are then buffered by the frame buffer 71 and supplied to the memory control and file/video converting unit 72.

The file/video converting unit 72 converts the supplied video data into one image file per frame. The CPU 73 writes the image files in a directory specified by operation on the Web page (corresponding to directory specified on the "Disk Control" panel 41 of the VTR 1 shown in FIG. 7) of directories of the hard disk apparatus (hard disk apparatus 5 shown in FIG. 4) mounted on the telecine apparatus 2 as the files having the name and serial numbers entered on the Web page (input to the input field of the VTR 142 shown in FIG. 7).

It should be noted that when the band of the network is narrower than that of the telecine apparatus 2, the free space of the frame buffer 71 is decreased (the predetermined threshold value or less), and hence the CPU 73 interrupts reproducing the cinema film cf. After exporting the video data from the cinema film cf to the hard disk apparatus, sufficient free space may be obtained, and thus the CPU 73 restarts to reproduce the cinema film cf.

Next, the following procedure describes that a host computer 6 uses the VTR 1 as an input source of a raw material and the output/storing destination for editing and synthesizing result, and also uses the telecine apparatus 2 as an input source of a raw material in the non-linear editing system shown in FIG. 4.

When the host computer 6 uses a VTR 1-1, for example, as an input source of a raw material, the user accesses a Web page of the VTR 1-1 by using the Web browser to mount the hard disk apparatus 5 as the local disk via the "DISK SETUP" page shown in FIG. 6.

Through the aforementioned procedures of conduction operation on the "IMPORT" page shown in FIG. 7, the video data with a desired range is imported from the VTR 1 to the hard disk apparatus 5.

When the host computer 6 uses a VTR 1-2 and the telecine apparatus 2 as an input source of a raw material, the Web pages of the VTR 1-2 and the telecine apparatus 2 may be accessed to conduct the similar procedure, and hence, video data having a desired range may be imported from the VTR 1-2 and the telecine apparatus 2 to the hard disk apparatus 5 as files.

The video data imported to the hard disk apparatus 5 as described above may be edited and synthesized by mounting the hard disk apparatus 5 as the local disk in the host computer 6.

When the VTR 1-1, for example, is used as the output/storing destination of the edited and synthesized results, the Web page of the VTR 1-1 may be accessed by the Web browser to perform the aforementioned operation procedures on the "EXPORT" page shown in FIG. 8, and hence, the edited and synthesized results may be exported to the VTR 1-1. When the VTR 1-2 is used as the output/storing destination of the edited and synthesized results, if the same operation procedures are carried out, the edited and synthesized results may be exported to the VTR 1-2.

Accordingly, information indicating the content of operation performed on the Web page is transmitted to the Web server only by accessing from the host computer 6 to the Web server of the VTR 1 or the telecine apparatus 2, and the information is then automatically imported into the hard disk 5 or exported to the video tape in the background. In addition, the information may automatically be imported from the telecine apparatus 2 to the hard disk 5 in the background.

In a case where any of workstations and personal computers employing Windows® as OS and Macintosh® computers are used as the host computer 6, the VTR and the telecine apparatus may be connected to a computer as one of the input and output devices without installing any special application software and hardware for controlling the VTR or the telecine apparatus, and may be used as an input source of a raw material or the output/storing destination of the edited and synthesized results. Further, the VTR may not need changing a tape format (change the tape format into a tape format for tape streamer, etc.) or using any special video cassette (special video cassette with file information storing memory tag, etc.). Therefore, the VTR may employ general tape formats and general video cassettes.

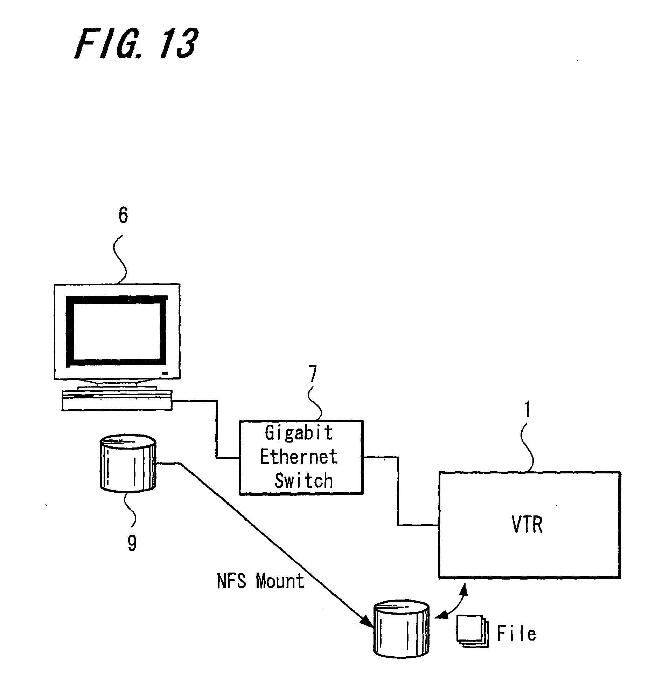

It should be noted that the non-linear editing system shown in FIG. 4 includes a connection form in which a plurality of host computers 6, a plurality of VTRs 1 and the telecine apparatus 2 are connected to the central server 3 located at the center; however, the present invention is not limited thereto. The connection form may only include one host computer 6 connected with one VTR 1 or the telecine apparatus 2. In any of the connection forms, the VTR and the telecine apparatus may be used as an input source of a raw material and the output/storing destination of the edited and synthesized results depending on the conditions such as bands of networks, capabilities of computers, and the like. FIG. 13 shows an example in which one host computer 6 and one VTR 1 are connected to the gigabit Ethernet using the gigabit Ethernet switch 7 as the switching hub. In the connection form shown in FIG. 13, the host computer 6 employs a built-in hard disk apparatus 9 as the NFS server to export video data and the VTR 1 mounts the hard disk apparatus 9 to import video data.

According to the above-mentioned embodiments, the memory control and file/video converting unit 23 in the net interface unit 1b of the VTR 1 and the memory control and file/video converting unit 72 in the net interface unit 2b of the telecine apparatus 2 convert video data into one image file per frame. However, alternatively, the memory control and file/video converting units 23 and 72 may convert video data into one cinema file per plurality of frames.

According to the embodiments of the present invention, in the net interface unit 1b of the VTR 1, compressed video data are stored in the frame buffer (main) 21 and non-compressed video data are stored in the frame buffer (sub) 22 as shown in FIGS. 9 and 10. However, alternatively, the frame buffers 21 and 22 may be used as one frame buffer. When video data are imported to the hard disk apparatus (IMPORT), the non-compressed video data from the BRR decoder 16 may be buffered by the frame buffers 21 and 22, and supplied to the memory control and file/video converting unit 23. When, on the other hand, video data are exported to the video tape (EXPORT), the non-compressed video data from the file/video converting unit 23 may be buffered by the frame buffers 21 and 22, and supplied to the BRR encoder 12. However, in view of efficient use of the frame buffer having a limited capacity, it is desirable that compressed video data may be stored in the frame buffer (main) 21 in a recording and reproducing apparatus using compression technologies as shown in FIGS. 9 and 10.

According to the embodiments of the present invention, the hard disk apparatus is mounted on the VTR 1 and the telecine apparatus 2 via the NFS (network file system); however, the present invention is not limited thereto. The hard disk apparatus may be mounted on the VTR 1 and the telecine apparatus 2 via a file sharing system (e.g., file sharing system using Samba software) other than the NFS.

The embodiments of the present invention are applied to the VTR and the telecine apparatus; however, the present invention is not limited thereto. The embodiments of the present invention may similarly be applied to a recording and reproducing apparatus having a sequential-access system other than the VTR and a reproducing apparatus having a sequential-access system other than the telecine apparatus.

It should be understood by those skilled in the art that various modifications, combinations, sub-combinations and alterations may occur depending on design requirements and other factors insofar as they are within the range of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A recording and reproducing apparatus for recording and reproducing data on and from a recording medium with a sequential access system, comprising:
connecting means for connecting a network,
processing means for mounting a disk apparatus connected to a server as a client in file-sharing system via the connecting means, reproducing data from the recording medium, converting the reproduced data into files, and writing the files in the disk apparatus based on receiving first information via a network that instructs the recording and reproducing apparatus to import data recorded on the recording medium into the disk apparatus; and
the processing means for reading the files from the disk apparatus, and recording data converted from the read files on the recording medium based on receiving second information via a network that instructs the recording and reproducing apparatus to write the files in the disk apparatus on the recording medium.

2. A recording and reproducing apparatus according to claim 1, wherein
video data are recorded on the recording medium, and
the processing means converts the video data reproduced from the recording medium into a file per frame, based on receiving the first information and writes the file into the disk apparatus.

3. A recording and reproducing apparatus according to claim 1, wherein
video data are recorded on the recording medium,
the processing means reproduces a specified range of the video data from the recording medium based on receiving information indicating a range of importing video data by time code as the first information, and
the processing means records video data from the specified position of the video data on the recording medium based on receiving information indicating a head position of exported video data by time code as the second information.

4. A recording and reproducing according to claim 1, further comprising:
compressing means for compressing video data to be recorded,
expanding means for expanding the video data read from the recording medium to the original video data before compressed by the compressing means,
a main buffer memory, and
a sub buffer memory having capacity smaller than that of the main buffer memory, wherein
video data are recorded on the recording medium;
the processing means supplies the video data read from the recording medium to the expanding means while buffering the video data in the main buffer memory and writing the video data expanded by the expanding means in the disk apparatus while buffering the video data in the sub buffer memory based on receiving the first information; and
the processing means supplies files read from the disk apparatus to the compressing means while buffering the files in the sub buffer memory and writing the files compressed by the expanding means on the recording medium while buffering the files in the main buffer memory based on receiving the second information.

5. A recording and reproducing apparatus according to claim 1, wherein
the processing means starts up a Web server to release Web pages for transmitting the first information and the second information.

6. A recording and reproducing apparatus according to claim 1, wherein
the recording and reproducing system includes the Web pages that display buttons to operate the recording and reproducing apparatus and a display window that displays currently reproducing images in the recording and reproducing apparatus; and
the processing means that records video data on and reproduces the video data from the recording medium based on operating the buttons, and displays currently reproducing images on the display window.

7. A recording and reproducing apparatus according to claim 1, wherein
the recording and reproducing apparatus is a video tape recorder.

8. A reproducing apparatus for reproducing data from a recording medium with a sequential access system, comprising:
connecting means for connecting a network,
processing means for mounting a disk apparatus connected to a server as a client in file-sharing system via the connecting means, reproducing data from the recording medium, converting the reproduced data into files, and writing the files in the disk apparatus based on receiving first information via a network that instructs the recording and reproducing apparatus to import data recorded on the recording medium into the disk apparatus.

9. A reproducing apparatus according to claim 8, wherein
the reproducing apparatus is a telecine apparatus that reproduces images recorded on a cinema film while converting the cinema film into video data, and
the processing means converts the video data into files and writes the files into the disk apparatus.

10. A recording and reproducing apparatus for recording and reproducing data on and from a recording medium with a sequential access system, comprising:
a connection unit configured to connect a network,
a processor configured to mount a disk apparatus connected to a server as a client in file-sharing system via the connection unit, to reproduce data from the recording medium, to convert the reproduced data into files, and to write the files in the disk apparatus based on receiving first information via a network that instructs the recording and reproducing apparatus to import data recorded on the recording medium into the disk apparatus, and
the processor configured to read the files from the disk apparatus, and to record data converted from the read files on the recording medium based on receiving second information via a network that instructs the recording and reproducing apparatus to write the files in the disk apparatus on the recording medium.
